# EUROPEAN PATENT SPECIFICATION

(11) **EP 0 711 644 B1**
(45) Date of publication and mention of the grant of the patent: **15.03.2000**
(21) Application number: 95307952.2
(22) Date of filing: 07.11.1995
(51) Int. Cl.: B29C 35/02, B29C 33/68

(54) **A method for producing a tyre forming bladder**
Verfahren zum Herstellen von Bälgen zur Reifenformgebung
Procédé pour fabriquer des vessies de moulage de pneus

(30) Priority: 09.11.1994 JP 27515994
(43) Date of publication of application: 15.05.1996
(73) Proprietor: SUMITOMO RUBBER INDUSTRIES LIMITED, Kobe-shi, Hyogo-ken (JP)
(72) Inventor: Nobata, Tsugio, Higashishirakawa-gun, Fukushima-ken (JP); Kawasaki, Junichiro, Shirakawa-shi, Fukushima-ken (JP); Okada, Toshihiro, Shirakawa-shi, Fukushima-ken (JP); Itoh, Yoshie, Shirakawa-shi, Fukushima-ken (JP)
(74) Representative: Stewart, Charles Geoffrey

(56) References cited:
- EP-A- 0 399 526
- FR-A- 2 337 030
- GB-A- 835 334
- US-A- 4 822 436
- US-A- 4 863 650

## Description

This invention relates to a method for producing a bladder for use in a tyre process where a green tyre is expandingly formed and vulcanised in a toroidal shape.

Generally, a green tyre is placed in a vulcanising apparatus having upper and lower moulding members, and expandingly formed into a toroidal shape. Thereafter, the green tyre is vulcanised by heating the inner and outer surfaces of the green tyre to heat the whole.

More specifically, the vulcanising apparatus is provided with a central mechanism for supporting a green tyre. The upper and lower moulding members are disposed around the central mechanism to mould the green tyre into its specified shape. The central mechanism includes a bladder in the form of a rubber bag for expanding the green tyre into a toroidal shape.

After being mounted on the central mechanism of the vulcanising apparatus, the green tyre is vulcanised. In the vulcanising process, vulcanising medium is supplied into the bladder at a high temperature and high pressure to expand the green tyre into a toroidal shape. After a predetermined time, the expanding green tyre is restricted by the upper and lower moulding members, and kept in a specified toroidal shape. After the vulcanisation of the green tyre is completed, the upper and lower moulding members are separated and the bladder is contracted to enable the vulcanised tyre to be removed from the vulcanising apparatus.

In the vulcanising apparatus, the bladder is in close contact with the inner circumferential surface of the green tyre for a long time under conditions of high temperature and high pressure. Accordingly, there is a likelihood that the bladder adheres to the tyre. This will make it difficult to remove the vulcanised tyre from the bladder of the vulcanising apparatus.

In order to solve this problem recently, it has been proposed to use a coating of a separating agent layer on the outer surface of the bladder to assure easy separation between the bladder and the vulcanised tyre. However, there is a likelihood that oil components ooze or bleed from the bladder and spread between the outer surface of the bladder and the separating agent layer. As a result, the separating agent layer is liable to peel off from the outer surface of the bladder and the durability of the bladder consequently decreases.

The oil components causing such separating agent layer peeling are softener and plasticiser, such as castor oil, which have been added to crude rubber in the kneading process of the bladder production. To prevent such peeling, there has been proposed a way of reducing the amount of softener and plasticiser in the kneading process. However, the amount of softener and plasticiser is closely related to the workability or the ability of shaping of crude rubber. Accordingly, the amount of softener and plasticiser reduction is limited. Thus, this way is not sufficiently feasible.

It is an object of the present invention to provide a method for producing a bladder which has overcome the problems residing in the prior art.

It is another object of the present invention to provide a method for producing a bladder which is capable of suppressing separating agent layer peeling which assures increased durability of the bladder.

Accordingly the present invention is directed to a method for producing a bladder comprising the steps of shaping a mass of crude rubber containing an oil components into a specified bladder shape by a mould, vulcanising the shaped bladder in the mould, transporting the vulcanised bladder from the mould to a heating unit, heating the vulcanised bladder for a specified time period in the heated unit, and coating the outer surface of the vulcanised and heated bladder with a separating agent layer.

The green bladder may be preferably heated in an enclosed space having a specified high temperature. Further, it may be turned or relocated in the enclosed high temperature space.

The crude rubber for the bladder may be an isobutylene-isoprene rubber, and the separating agent may include silicone resin or fluorine resin.

In the invention method, a mass of crude rubber is shaped and vulcanised into a green bladder while being tightly held in a mould. The green bladder is then heated for a specified time while an outer surface of the green bladder is not tightly held in the mould. The heating process causes the oil component to ooze or bleed from the free outer surface of the green bladder, thereby removing the oil component from the green bladder. Thereafter, the oil component-removed green bladder is coated with a separating agent layer. Accordingly, this bladder production method can eliminate the likelihood that the oil component oozes from the bladder which is installed in a tyre vulcanising apparatus and is in the process of vulcanising a green tyre. The separating agent layer remains on the outer surface of the bladder for a long time because there is no likelihood oil component oozes from the bladder even under the high temperature condition of the tyre vulcanising operation. Thus, this inventive method can produce a bladder having an increased durability or life.

The heating of the green bladder in an enclosed space will assure the high thermal efficiency because the supplied thermal energy is enclosed. Also, the turning of the green tyre in the enclosed high temperature space will ensure uniform heating of the green bladder.

Further, the use of isobutylene-isoprene rubber for crude rubber and silicone resin or fluorine resin for separating agent increases the separating performance between the bladder and the green tyre in the tyre vulcanising apparatus.

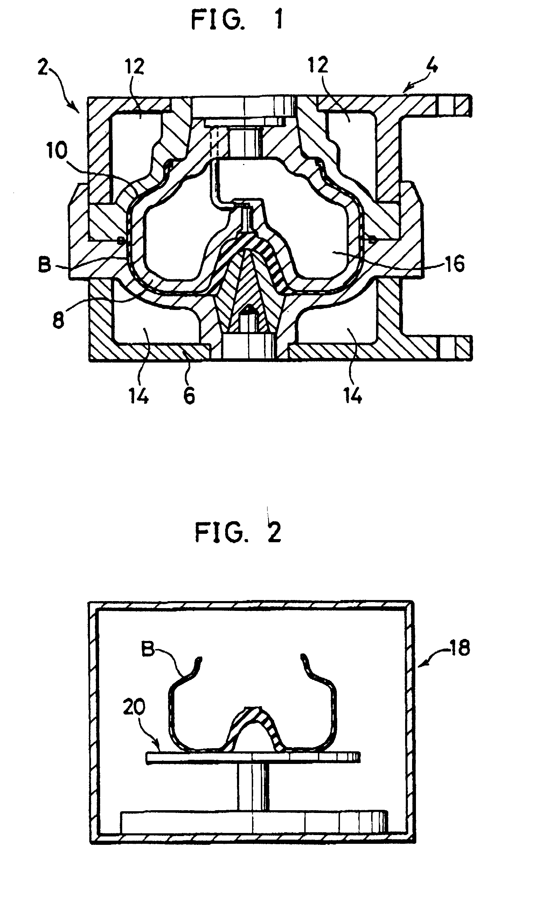

The above and other objects, features and advantages of the present invention will become more apparent upon a reading of the following detailed description and drawings in which:-
Figure 1 is a sectional diagram showing a vulcanising unit which is used in a bladder producing method embodying the present invention; and
Figure 2 is a sectional diagram showing a heating unit which is used in the bladder producing method.

The bladder vulcanising unit comprises an upper moulding member 4, a lower moulding member 6, and an intermediate moulding member 8. Crude rubber is placed in a cavity 10 defined between the upper moulding member 4 and the intermediate moulding member 8, and between the lower moulding member 6 and the intermediate moulding member 8 to form a bladder having a specified shape.

Specifically, a mass of crude rubber is placed in the vulcanising unit 2 in a state where the moulding members 4, 6 and 8 are set in their respective opened positions. Thereafter, the moulding members 4, 6 and 8 are set in their respective closed positions to thereby pressingly spread the mass of crude rubber in the entire cavity 10. In this embodiment, the crude rubber is isobutylene-isoprene rubber. The crude rubber includes softener and plasticiser to give it a specified level of viscosity or shaping ability.

After the moulding members 4, 6 and 8 are set in the closed positions, steam fills the inside hollow portions 12, 14 and 16 formed in the moulding members 4, 6 and 8, respectively, so that the moulding members 4, 6 and 8 are heated by the steam in the respective hollow portions 12, 14 and 16. Consequently, the crude rubber placed in the cavity 10 is formed into a bladder B having a specified shape and vulcanised.

Subsequently, the bladder B is taken out from the mould members of the vulcanising unit 2 and transported to a heating unit 18. The heating unit 18 has an enclosed space into which appropriate heating medium is supplied. The enclosed space of the heating unit 18 is kept at a high temperature, for example, about 180°C. The enclosed space is used to keep the supplied thermal energy in place. The bladder B is placed on a turntable 20 provided in the enclosed space of the heating unit 18 for a specified period of time. The turntable 20 is turned to heat the bladder B uniformly.

Upon completion of the heating stage, the bladder B is transported to a drying unit where the bladder B is dried. Thereafter, the bladder B is coated with a separating agent layer over an outer surface of the bladder B in a coating unit. More specifically, the separating agent includes silicone resin or fluorine resin and is applied to the outer surface of the bladder B which is to be brought into close contact with an inner circumferential surface of a green tyre. In this way, a bladder B is produced.

As mentioned above, the bladder B is obtained by heating a vulcanised and shaped rubber article for the specified time in the enclosed space and thereafter coating it with a separating agent layer. Compared to bladders produced by the conventional method, the bladder B is advantageous in that separating agent layer peeling is not liable to occur, and thus it has an increased durability.

More specifically, bladders produced by the conventional method have the drawbacks that during the vulcanising of green tyre, oil components such as softener and plasticiser, ooze from the bladder and spread in between the outer surface of the bladder and the separating agent layer, resulting in a peeling of the separating agent layer from the bladder. In this embodiment, however, the vulcanised article is heated in an enclosed space before being coated with separating agent layer on its outer surface. Consequently, oil components such as softener and plasticiser are oozed from the vulcanised articles in the heating unit, and vaporised and removed from the outer surface of the bladder. Accordingly, the bladder produced in this embodiment has no likelihood that oil components spread in between the outer surface of the bladder and the separating agent layer in the vulcanising operation of green tyre. Accordingly, the separating agent layer can be prevented from peeling off the outer surface of the bladder. Thus, the bladder produced by the present invention has an increased durability. This advantageous effect can be clearly seen from experiment data to be referred to later.

Further, in this embodiment, the oil components of the bladder B are removed after the shaping of the bladder in the vulcanising unit. Hence, the removal of the oil components of softener and plasticiser will not reduce the workability or the shaping ability of crude rubber which is necessary for the shaping of crude rubber into the specified bladder shape.

Table 1 shows comparisons between bladders produced by the conventional method and bladders produced by the method of the present invention. Table 1 has the following measurement items: vulcanisation time of forming a bladder, heating time of heating a formed bladder, extracted amount of oil components extracted by acetone, and durability of a bladder. Bladders I and II were produced by the conventional method while bladders III and IV were produced by the method of the present invention.

The respective extracted amounts and durabilities of the bladders II to IV are represented as relative value to those of the bladder I which are given a reference value of 100. The extracted amounts were obtained by immersing each bladder in a solution mainly composed of acetone for a specified time and measuring an amount of oil components which were extracted out from the bladder immersed in the solution.

**Table 1**

| | Bladder I | Bladder II | Bladder III | Bladder IV |
|---|---|---|---|---|
| Vulcanisation Time (min.) | 45 | 60 | 30 | 20 |
| Heating Time (min.) | 0 | 0 | 30 | 40 |
| Extracted Amount | 100 | 92 | 45 | 34 |
| Durability | 100 | 97 | 133 | 132 |

As can be clearly seen from Table 1, the inventive bladders III and IV which were heated between the coating of a separating agent layer and the shaping and vulcanising show an extremely reduced extracted amount of oil components compared to the conventional bladders I and II which were not heated between the coating of a separating agent layer and the shaping and vulcanising. This clearly shows that the heat treatment before the separating agent coating after the shaping and vulcanising effectively removes oil components from the shaped and vulcanised bladder. Further, the inventive bladders III and IV have the durability greater than the conventional bladders I and II which were not applied with the heat treatment before the separating agent coating.

Although the present invention has been fully described by way of example with reference to the accompanying drawings, it is to be understood that various changes and modifications will be apparent to those skilled in the art Therefore, unless otherwise such change and modifications departs from the scope of the invention, they should be construed as being included therein.

## Claims

1. A method for producing a bladder (B) comprising the steps of shaping a mass of crude rubber containing an oil components into a specified bladder shape by a mould, vulcanising the shaped bladder in the mould, transporting the vulcanised bladder from the mould to a heating unit, heating the vulcanised bladder for a specified time period in the heated unit, and coating the outer surface of the vulcanised and heated bladder with a separating agent layer.

2. A method as defined in claim 1, characterised in that the heating of the vulcanised bladder is carried out in an enclosed space having a specified temperature.

3. A method as defined in claim 1 or 2, characterised in the vulcanised bladder is turned in the enclosed space while being heated.

4. A method as defined in any of claims 1, 2 or 3, characterised in that the crude rubber is isobutylene-isoprene rubber.

5. A method as defined in any of claims 1 to 4, characterised in that the separating agent includes silicone resin.

6. A method as defined in any of claims 1 to 4, characterised in that the separating agent includes fluorine resin.

## Patentansprüche

1. Verfahren zum Herstellen eines Heizbalges (B) mit den Schritten, daß eine Masse aus rohem Kautschuk, der Ölbestandteile enthält, mittels einer Form zu einer festgelegten Heizbalgform geformt wird, der geformte Heizbalg in der Form vulkanisiert wird, der vulkanisierte Heizbalg aus der Form zu einer Heizeinheit transportiert wird, der vulkanisierte Heizbalg für eine festgelegte Zeitdauer in der beheizten Einheit erwärmt wird, und die Außenfläche des vulkanisierten und erwärmten Heizbalges mit einer Trennmittelschicht beschichtet wird.

2. Verfahren nach Anspruch 1, dadurch gekennzeichnet, daß das Erwärmen des vulkanisierten Heizbalges in einem umschlossenen Raum ausgeführt wird, der eine festgelegte Temperatur aufweist.

3. Verfahren nach Anspruch 1 oder 2, dadurch gekennzeichnet, daß der vulkanisierte Heizbalg in dem umschlossenen Raum gedreht wird, während er erwärmt wird.

4. Verfahren nach einem der Ansprüche 1, 2 oder 3, dadurch gekennzeichnet, daß der rohe Kautschuk Isobutylen-Isopren-Kautschuk ist.

5. Verfahren nach einem der Ansprüche 1 bis 4, dadurch gekennzeichnet, daß das Trennmittel Silikonharz umfaßt.

6. Verfahren nach einem der Ansprüche 1 bis 4, dadurch gekennzeichnet, daß das Trennmittel Fluorharz umfaßt.

## Revendications

1. Procédé de production d'une vessie (B), comprenant les étapes suivantes : la mise en forme d'une masse de caoutchouc non vulcanisé contenant des ingrédients huileux à une configuration spécifiée de vessie à l'aide d'un moule, la vulcanisation de la vessie mise en forme dans le moule, le transport de la vessie vulcanisée du moule à une unité de chauffage, le chauffage de la vessie vulcanisée pendant un temps spécifié dans l'unité chauffée, et le revêtement de la surface externe de la vessie vulcanisée et chauffée d'une couche d'un agent de démoulage.

2. Procédé selon la revendication 1, caractérisé en ce que le chauffage de la vessie vulcanisée est réalisé dans un espace fermé ayant une température spécifiée.

3. Procédé selon la revendication 1 ou 2, caractérisé en ce que la vessie vulcanisée est tournée dans un espace fermé tout en étant chauffée.

4. Procédé selon l'une des revendications 1, 2 et 3, caractérisé en ce que le caoutchouc non vulcanisé est un caoutchouc d'isobutylène-isoprène.

5. Procédé selon l'une quelconque des revendications 1 à 4, caractérisé en ce que l'agent de démoulage contient une résine de silicone.

6. Procédé selon l'une quelconque des revendications 1 à 4, caractérisé en ce que l'agent de démoulage comprend une résine fluorée.
